# EUROPEAN PATENT SPECIFICATION

(11) **EP 0 741 041 B1**
(45) Date of publication and mention of the grant of the patent: **12.01.2000**
(21) Application number: 96303080.4
(22) Date of filing: 01.05.1996
(51) Int. Cl.: B41J 2/205

(54) **Selective droplet dispersion technique**
Technik zur selektiven Tropfendispersion
Technique de dispersion sélective de gouttelette

(30) Priority: 04.05.1995 US 434781
(43) Date of publication of application: 06.11.1996
(73) Proprietor: Scitex Digital Printing, Inc., Dayton, Ohio 45420-4099 (US)
(72) Inventor: Piatt, Michael J., Dayton, Ohio 45429 (US); Bitticker, William R., Centerville, Ohio 45458 (US)
(74) Representative: Hillier, Peter

(56) References cited:
- EP-A- 0 513 989
- EP-A- 0 517 519
- EP-A- 0 596 723
- WO-A-92/06553
- US-A- 4 642 653
- US-A- 4 673 951

## Description

### Technical Field

The present invention relates to continuous tone ink jet images and, more particularly, to the placement of droplets within a pixel based on adjacent pixels, for the purpose of optimizing quality.

### Background of the Invention

In continuous ink jet printing, ink is supplied under pressure to a manifold region that distributes the ink to a plurality of orifices, typically arranged in a linear array(s). The ink discharges from the orifices in filaments which break into droplet streams. The approach for printing with these droplet streams is to selectively charge and deflect certain drops from their normal trajectories. Graphic reproduction is accomplished by selectively charging and deflecting drops from the drop streams and depositing at least some of the drops on a print receiving medium while other of the drops strike a drop catcher device. The continuous stream ink jet printing process is described, for example, in U.S. Pat. Nos. 4,255,754; 4,698,123 and 4,751,517, the disclosures of each of which are totally incorporated herein by reference.

Continuous tone ink jet images are produced by varying the number of print droplets within a single pixel location. In some instances, there is some degree of latitude for placement of the individual droplet within the pixel. By biasing the printed droplets based on a weighing of the density of adjacent print pixels the overall print quality is enhanced. This is particularly true along the boundaries of sharp changes in contrast, such as the transition from solid print to no print along the edges of characters or other image data.

It is known in the prior art that anti-aliasing is a valid technique for improving the quality of low resolution dot matrix text printing. This technique involves the strategic placement of gray dots along the borders between the white paper and the solid black text to effect a smooth transition between the two contrasting densities. The human eye tends to integrate the light and dark dots, making low resolution character and image data edges appear smoother. It is most effective on diagonal strokes where the stair step effects are minimized with the use of gray droplets in the pixel locations along the steps.

There are several methods of producing a gray scale necessary for creating anti-aliased text. The most straightforward approach is to employ a printing technology that allows for equal size dots of varying optical density to be selectively placed in each pixel location. Thermal dye sublimation printers have the capability to image in this fashion.

Another method of producing gray scale is to modulate the dot size of a fixed density ink within a given pixel location. The amount of ink coverage relative to the exposed paper over a given area of the paper determines the level of gray interpreted by one's sensory system. At around two hundred dots per inch, the human eye integrates the varying degrees of individual pixel intensity into a single structure such as the shape of a character or image data.

The number of gray scale levels available to a given printing technology affects the ability to accurately represent the character or image data formation. In general, the smaller the minimum dot size, the better this anti-aliasing technique works. Depending on the point size of the font, often several pixels within the width of a stroke are used to blend the transition from solid black to white in order to improve overall quality.

Another aspect of blending the transition from solid black to white is possible when the printing process is capable of placing spots with greater accuracy than the nominal number of spots per inch. For example, if the process is nominally printing at a spatial resolution of 200 dots per inch, then visible stair stepping or jagged edges occur in slanted or diagonal lines. If the printing process is capable of placing a small spot at various locations within a pixel, then a remarkable improvement in the appearance of the line can be achieved. Such a process is disclosed in U.S. Pat. No. 4,620,196, wherein the number of drops which can be placed in a pixel varies from zero to a given maximum number. In this type of process, a range of optical densities can be achieved by placing a preselected number of drops in the pixel.

There is a need, however, for a technique for selectively identifying the optimum print droplets within the packet of droplets available for a given pixel location, in order to maximize image quality for a printing system that has significantly greater spatial dot addressability in one direction relative to the orthogonal direction within the plane of printing.

### Summary of the Invention

This need is met by the present invention which discloses a selective droplet dispersion technique. The present invention addresses the placement of droplets within a pixel based on adjacent pixels, for the purpose of optimizing image quality.

In accordance with one aspect of the present invention, selective droplet dispersion is used to optimize image quality from a continuous ink jet printer. Initially, a pixel to be printed is identified, and then placement of droplets within the pixel to be printed is selected to optimize image quality. The selection can be unconditional, wherein the placement of droplets is not dependent on neighboring pixels. Such selection includes printing first or last available droplets, or centering the droplets within the pixel to be printed. The selection can also be conditional, wherein placement of droplets is dependent on surrounding pixels. Such selection includes providing data from at least one surrounding pixel relative to the identified pixel and using the surrounding pixel data to select droplet placement within the identified pixel.

An object of the present invention is to address the placement of droplets within a pixel, based on adjacent pixels. It is a further object of the present invention to selectively identify the optimum print droplets within a packet of droplets available for a given pixel location. It is an advantage of the present invention that it maximizes image quality for a printing system that has significantly greater spatial dot addressability in one direction relative to the orthogonal direction within the plane of printing.

Other objects and advantages of the invention will be apparent from the following description and the appended claims.

### Brief Description of the Drawings

Figs. 1A and 1B illustrate a typical character, imaged by prior art dot matrix and anti-aliasing techniques, respectively;
Fig. 2 is a magnified illustration of a section of the character printed in Fig. 1B, using droplet selection according to the present invention;
Figs. 3, 4 and 5 illustrate the effects to the character of Fig. 1B when printing in accordance with various embodiments of droplet selection of the present invention;
Fig. 6 is a block diagram illustrating preprocessing of data, in accordance with the present invention; and
Fig. 7 is a portion of a lookup table in Fig. 6.

### Detailed Description of the Invention

In accordance with the present invention, a technique is defined for selectively identifying the optimum print droplets within the packet of droplets available for a given pixel location, in order to maximize image quality for a printing system that has significantly greater spatial dot addressability in one direction relative to the orthogonal directions within the plane of printing.

Continuous ink jet printers are typically limited in resolution due to the physical constraints of orifice spacing within the array. Full color graphics printing with such continuous ink jet systems provides acceptable quality by virtue of the tremendous amount of image information present in the primary color data planes. Slight misregistration between the colors within one pixel element serves to soften the edges and minimize the individual pixel effects on quality due to the low spatial resolution. In accordance with the present invention, the image quality of single color text and line art is improved.

The present invention is a selected method of practicing anti-aliasing. Once the gray level of a given pixel is determined, some method of depositing the correct amount of ink into that pixel location must be devised. Multiple drops per pixel are used to achieve gray scale. Since it is virtually impossible to lay sequential droplets directly on top of one another, because of the web movement, droplets are chosen to be printed within a given pixel location. The present invention addresses the selection of which droplets are chosen to be printed in a given pixel location. The present invention uses the higher dot addressability or resolution in the web feed direction to advantage.

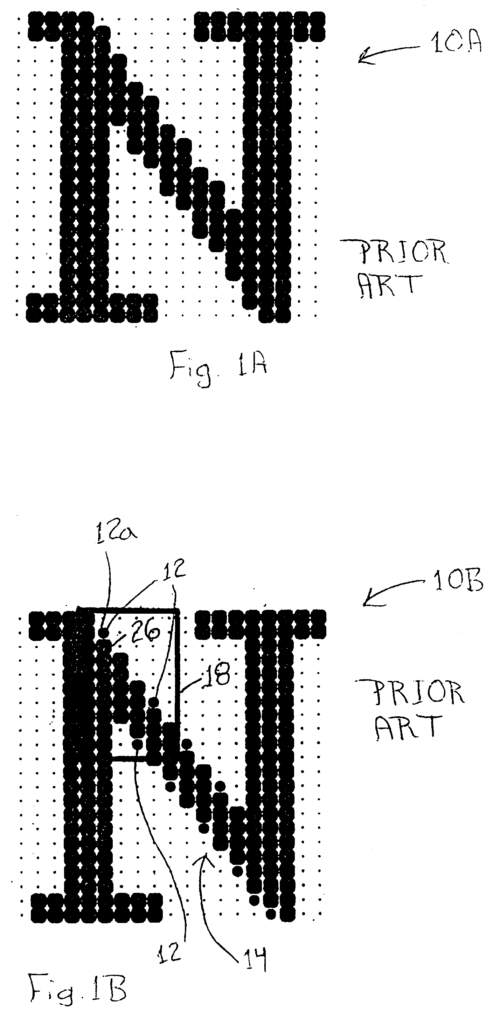

As known in the prior art, text quality of dot matrix formed characters can be improved by the process of anti-aliasing. Referring now to the drawings, Fig. 1A is an illustration of a character 10A imaged by prior art dot matrix techniques; and Fig. 1B is an illustration of the same character, here referred to by reference number 10B, imaged by using prior art anti-aliasing techniques. As can be seen by comparing Fig. 1A to Fig. 1B, smaller dots 12 along the diagonal 14 of character 10B decreases the apparent stair-step effect that is the result of the dot matrix pattern 10A. It is generally recognized in the art that characters formed from dot matrix patterns with a resolution of 400 dots per inch do not require anti-aliasing. Modern laser printers image at 600 dots per inch, whereas typical continuous ink jet printers are limited to 300 dots or less per inch.

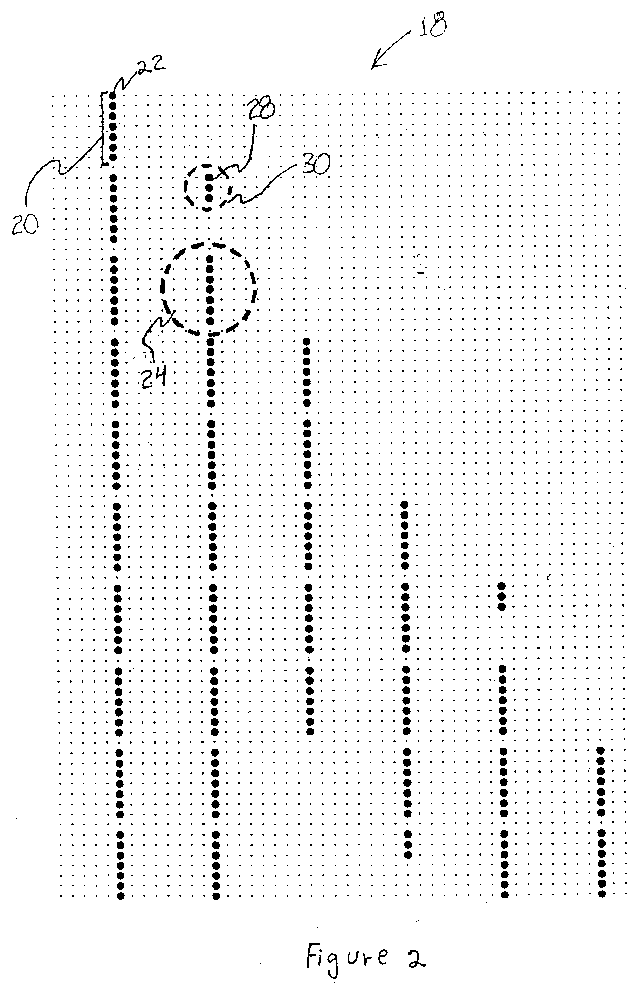

Referring now to Fig. 2, there is illustrated an example of how the anti-aliased text of Fig. 1B can be printed using droplet selection according to the present invention. In accordance with one embodiment of the present invention, droplet selection results in the anti-aliased text of Fig. 1B being printed according to the technique disclosed in commonly assigned, copending U.S. Application Serial No. 08/379,936, entitled GRAY SCALE PRINTING WITH HIGH RESOLUTION ARRAY INK JET, filed on January 27, 1995, by John M. Schneider et al, incorporated herein by reference. In web printing applications, where the orifice array spacing is orthogonal to the direction of paper movement, it is possible to increase the dot spacing in the direction of paper movement. This is accomplished by simply generating a number of available print droplets over the time that the paper moves one pixel distance under the printhead. Any number of the available droplets can be dropped (i.e., printed) inside of the rectangular pixel grid.

Continuing with Figs. 1B and 2, an area inside box 18 of Fig. 1B is shown enlarged in Fig. 2. Solid black pixels 20 are each formed from seven individual droplets 22. The seven droplets 22 encircled by dotted line 24, upon contacting the substrate, spread together on the paper and form one large spot, similar to spot 26 shown in Fig. 1B.

The small dots 12 in Fig. 1B are formed from three individual droplets 28, shown in the encircled section 30 of Fig. 2. The small dots 12 spread together upon printing to form the smaller solid spot 12a, as shown in Fig. 1B. It should be appreciated in the example illustrated in Fig. 2 that the first available print droplets within a pixel were used to form the character.

In one aspect of the present invention, image quality is optimized by unconditionally adjusting placement of droplets within the pixel to be printed. Without recognizing the benefits of preferential droplet selection within a pixel, it might be that the first droplets available to fill a given pixel would be the most logical choice. The present invention, however, recognizes that it is advantageous to select droplets for printing on criteria in addition to the first available. If the dot resolution is high enough to eliminate mist quality problems with respect to printing, the example illustrated in Fig. 2, wherein the first available print drops are printed, can be easily implemented with good results. Similarly, the last available droplets can be printed with good results.

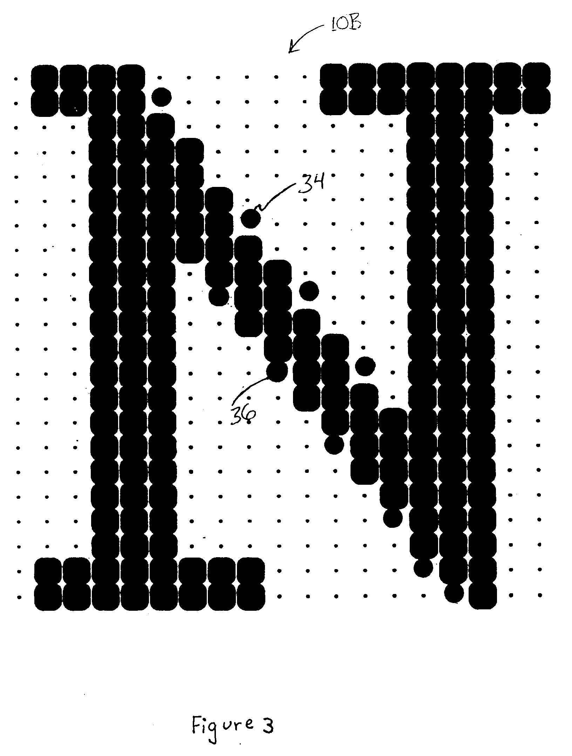

Referring now to Fig. 3, the resultant character shape when the first available droplets of a pixel are selected is illustrated. The bottom of the character exhibits good print quality because the smaller droplets are in close proximity to the body of the character. On top of the diagonal of the character, smaller droplets are separated from the body of the character, so the quality is degraded along the top side. Top diagonal small dots 34 are displaced a fraction of a pixel to form the main body of the character. In contrast, small dots 36 on the lower side of the diagonal are adjacent to the body of the character. The visual quality of a character formed in this fashion is less than optimum. As will be obvious to anyone skilled in the art, the amount of degradation in quality as a result of this asymmetric spot placement is a function of print speed, dot size, and overall character size.

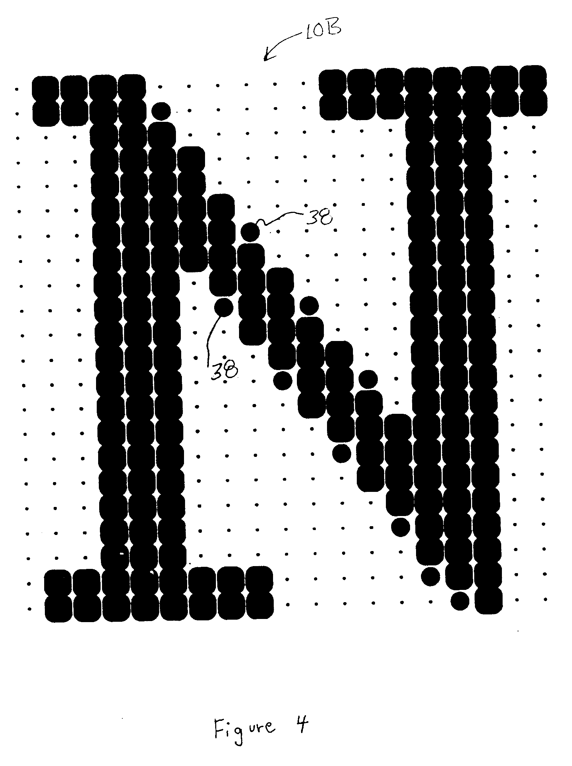

Referring now to Fig. 4, the character 10B is illustrated. The image quality of the character of Fig. 4 is improved over the image quality of the character in Fig. 3 by unconditionally adjusting placement of droplets, i.e., selecting placement of droplets without considering location of surrounding pixels. In Fig. 4, the center droplets of a pixel are always selected for print. In this case, the top and the bottom of the diagonal stroke look the same. The small droplets are closer to the character than they are on the top side of the diagonal of Fig. 3. Image quality, then, can be improved by always centering the packet of print droplets 38 within the pixel location; where a packet of print droplets are the selected droplets for printing among those available for a given pixel location. For example, if it is desired to print three droplets out of eight available for a given pixel, the first three, or the last three, or the center three, or any other choice of three droplets can be printed to form the gray scale pixel.

In order to produce a character such as is shown in Fig. 4, it is necessary for the printer to have sufficient intelligence to handle each pixel weighing differently, where pixel weighing refers to the number of droplets of those available for a pixel that are to be printed. For example, if there are seven droplets available for printing at a given pixel location, then there are eight unique weights, zero through seven. In order to center the print droplets within a pixel, a unique print/catch pattern must be stored for each pixel weight. For example, if the two center droplets are to be printed, then the printer must catch three, print two, then catch the next three; if the four center droplets are to be printed, then the printer must catch two, print four, and catch the next two. Likewise, if one droplet out of seven available is to be printed, the printer electronics must allow the first three droplets of the pixel to be caught, then print the fourth droplet, then catch the fifth through the seventh droplets. If the first available droplets are always printed, then the printer electronics do not have to be as intelligent. When a print signal is received, the printer begins printing droplets until the proper number have been imaged; then the printer takes the jet back into catch and waits for the next print signal.

The droplet selection embodiments of the present invention described above, i.e., unconditionally adjusting placement of droplets by printing first or last available drops or by always centering the print droplets within the pixel location, is easy to implement. Printing the first or last available droplets is a straightforward embodiment of the present invention. This embodiment, while being the easiest to implement, yields passable, but not always excellent, image quality. A second aspect of the present invention, centering the droplets within the pixel, is somewhat more complex but also provides improved image quality. A third aspect of the present invention conditionally adjusts placement of droplets within the pixel to be printed. With such an approach, selection of which droplets to print is based on neighboring or surrounding pixels. This puts all of the small droplets in close proximity to the main body of the character. The human eye then integrates this pixel formation as a smooth diagonal stroke.

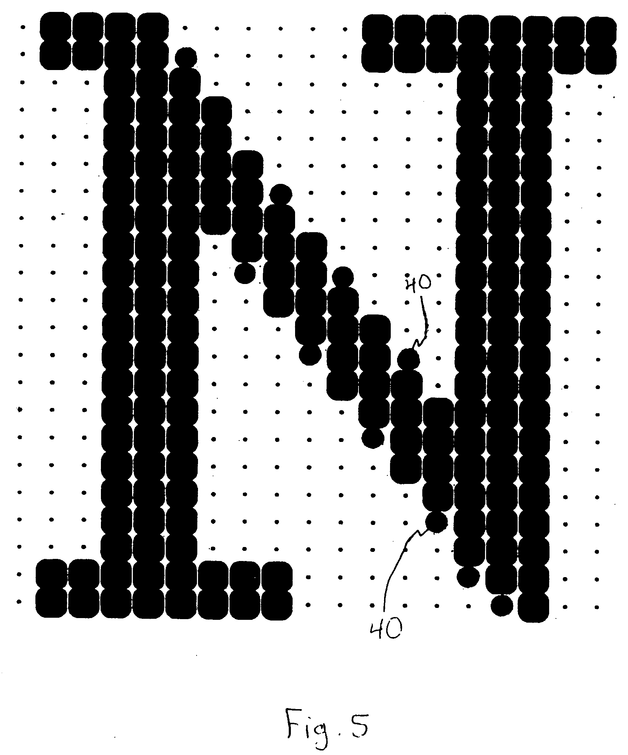

In the conditional droplet selection embodiment of the present invention, wherein surrounding pixels are considered, image quality is further enhanced by pre-processing the print data in order to consider pixel weighing of both the previous and the subsequent pixels printed by the same jet. The result of implementing the method of droplet selection in accordance with this embodiment of the present invention is illustrated in Fig. 5. Smaller droplets 40 are placed adjacent to the character on both the top and bottom sides of the diagonal. On the top of the diagonal, the last droplets of the available pixel packet are printed so that they will be in close proximity to the body of the character. On the lower side of the diagonal, the first available droplets of the pixel packet are printed, to be in close proximity to the body of the character.

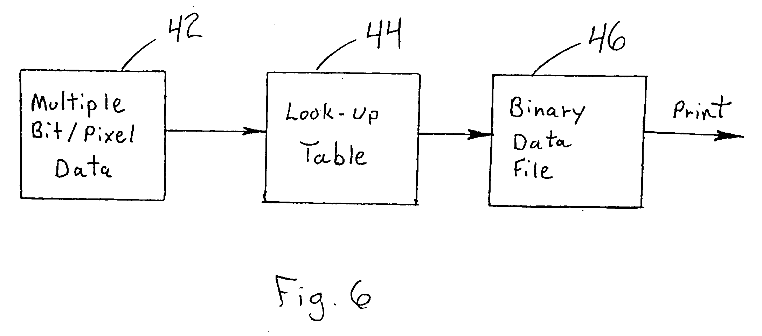

In order to consider the neighboring pixels, the system must be intelligent enough to keep track of the previous and the following pixels. In accordance with a preferred embodiment of the present invention, pre-processing of the data is accomplished with a lookup table that defines the dot placement within a pixel before printing. The pre-processing is based on data from the previous and subsequent pixels and is illustrated in block diagram form in Fig. 6. Multiple bit/pixel data from block 42 is provided to a lookup table at block 44. The lookup table can be customized for a given application, or it can be based on a generalized algorithm.

Continuing with Fig. 6, digital images to be printed are received in one of a number of standard formats. Regardless of the file format chosen, these files typically represent the image data in the primary colors of cyan, magenta, yellow and black. Alternatively, the image data is represented in red, green and blue. There are a number of schemes known in the art for transforming the data from one color coordinate system to the other. In either case, each pixel is represented with a density value, typically from 0 to 255, for each of the primary colors. Image processing systems referred to as the "front end" processors manipulate the image data. These systems are used to edit the pictures, superimpose the text, and generally prepare the desired image on the screen.

This generalized image file is sent to a specific output device. The goal of the output device is to accurately reproduce the screen image as prepared in the "front end" system. Each output device has its own methods of processing the same standard input data, depending on the technology employed by the printer. The multiple bit/pixel data of block 42 represents the standard image data sent to the printer, and the look-up table 44 may be resident in the printer and part of the scheme for reducing the data into a format that can be output. It should be appreciated by those skilled in the art, of course, that there is a substantial amount of data processing that occurs inside the printer in order to accurately represent the original image.

The final step for preparing the image for printing is to reduce the file to a pure binary form, as indicated by binary data file block 46. This final output from block 46 is sent directly to the ink jet drive electronics to control the printing of each jet as the paper passes through the system. The 0-1 binary file is illustrated in Fig. 2.

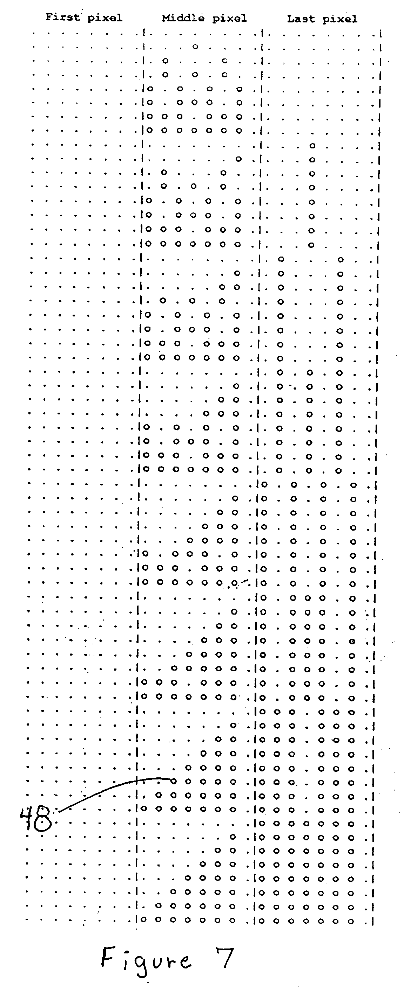

A portion of a typical lookup table of Fig. 6 is illustrated in Fig. 7, where "O's" 48 represent print droplets from the available eight droplet pixel packets. The "middle" pixel is the one that is defined by the "first" and "last" pixel values. As will be obvious to those skilled in the art, there are multiple ways to define which droplets to print. Fig. 7 illustrates part of a lookup table that considers the weight of the pixel above and below a given pixel, in order to determine how to distribute the print droplets within a pixel. In this table, the dots represent available droplets and the O's represent print droplets. The decisions to print droplets within the middle pixel are based on the data in the first and last pixels.

It will be obvious to those skilled in the art that the droplet selection concept of the present invention is applicable to image data as well.

It will be appreciated by one skilled in the art that the number of dot selections within a pixel can be derived from a number of different algorithms. In the case of images, rather than text and line art, it may be advantageous to equally distribute the print droplets within a pixel to soften the edges and minimize print registration errors between colors. As another example, it is certainly possible to select the preferred print droplets within a pixel as a function of adjacent pixels in two dimensions. In such a case, the system considers the pixel values all around a given pixel under evaluation to determine which droplets would be printed. This would include using the pixels on either side, in front, and behind a given pixel to optimize selection of the printing of droplets within a given pixel. Optimization would skew the droplets within a given pixel toward the edge of the pixel where adjacent pixels have higher weights. In general, if the adjacent pixels have equal weights, then the print droplets within the pixel under evaluation should be evenly distributed.

Continuous tone ink jet images are produced by varying the number of print droplets within a single pixel location. In accordance with the present invention, selective droplet dispersion is used to determine placement of the individual droplet within the pixel. By biasing the printed droplets based on a weighing of the density of adjacent print pixels the overall print quality is enhanced. This is particularly true along the boundaries of sharp changes in contrast, such as the transition from solid print to no print along the edges of characters.

The present invention solves the heretofore unrecognized problem of determining how to print droplets for optimum image quality. In most printing technologies, there is an equal horizontal and vertical dot addressability, and dots are printed on top of dots within a pixel. The present invention, then, is the intelligent selection of droplets within a pixel location, and is particularly advantageous when the horizontal dot addressability is not equal to the vertical dot addressability.

### Industrial Applicability and Advantages

The present invention is useful in the field of ink jet printing, and has the advantage of improving quality of an ink jet printing image. The present invention has the further advantage of providing addressing the placement of droplets within a pixel, for the purpose of optimizing quality. The present invention is particularly advantageous for use in a continuous tone ink jet printer, along the boundaries of sharp changes in contrast, such as the transition from solid print to no print along the edges of a character or any other image data.

## Claims

1. A method of optimizing quality of images from a continuous ink jet printer, the method comprising the steps of:
identifying a pixel to be printed;
selecting placement of droplets within the pixel to be printed to optimize image quality.

2. A method as claimed in claim 1 wherein the step of selecting placement of droplets within the pixel to be printed to optimize image quality comprises the step of unconditionally adjusting placement of droplets within the pixel to be printed.

3. A method as claimed in claim 1 wherein the step of selecting placement of droplets within the pixel to be printed to optimize image quality comprises the step of conditionally adjusting placement of droplets within the pixel to be printed.

4. A method as claimed in claim 3 wherein the step of conditionally adjusting placement of droplets within the pixel to be printed comprises the steps of:
providing data from at least one surrounding pixel relative to the identified pixel;
using the surrounding pixel data to select droplet placement within the identified pixel.

5. A method of selective droplet dispersion for optimizing quality of images from a continuous ink jet printer, the method comprising the steps of:
identifying a pixel for manipulation;
providing data from at least one surrounding pixel relative to the identified pixel;
using the surrounding pixel data to select droplet placement within the identified pixel.

6. A method of selective droplet dispersion as claimed in claim 5 wherein the step of providing data from at least one surrounding pixel comprises the step of providing data from neighboring pixels.

7. A method of selective droplet dispersion as claimed in claim 6 wherein the step of providing data from neighboring pixels comprises the steps of:
providing data from a previous pixel; and
providing data from a subsequent pixel.

8. A method of selective droplet dispersion as claimed in claim 6 wherein the step of providing data from neighboring pixels comprises the steps of:
providing data from an adjacent left pixel;
providing data from an adjacent right pixel;
providing data from a leading pixel; and
providing data from a trailing pixel.

9. A method of selective droplet dispersion for optimizing quality of images from a continuous ink jet printer, the method comprising the steps of:
identifying a pixel for manipulation;
selecting placement of droplets within the pixel to be printed independent of surrounding pixels.

10. A method as claimed in claim 9 wherein the step of selecting placement of droplets within the pixel to be printed comprises the step of unconditionally adjusting placement of droplets within the pixel to be printed.

## Patentansprüche

1. Verfahren zum Optimieren der Qualität der Bilder aus einem kontinuierlichen Tintenstrahldrucker, wobei das Verfahren die folgenden Schritte enthält:
Identifizieren eines zu druckenden Pixels; und
Auswählen der Anordnung von Tröpfchen innerhalb des zu druckenden Pixels, um die Bildqualität zu optimieren.

2. Verfahren nach Anspruch 1,
bei dem der Schritt des Auswählens der Anordnung der Tröpfchen innerhalb des zu druckenden Pixels zur Optimierung der Bildqualität den Schritt des unabhängigen Einstellens der Anordnung der Tröpfchen innerhalb des zu druckenden Pixels enthält.

3. Verfahren nach Anspruch 1,
bei dem der Schritt des Auswählens der Anordnung der Tröpfchen innerhalb des zu druckenden Pixels zur Optimierung der Bildqualität den Schritt des abhängigen Einstellens der Anordnung der Tröpfchen innerhalb des zu druckenden Pixels enthält.

4. Verfahren nach Anspruch 3,
bei dem der Schritt des abhängigen Einstellens der Anordnung der Tröpfchen innerhalb des zu druckenden Pixels die folgenden Schritte enthält:
Bereitstellen von Daten aus zumindest einem Umgebungspixel bezogen auf das identifizierte Pixel; und
Benutzen der Daten des Umgebungspixels, um die Tröpfchenanordnung innerhalb des identifizierten Pixels auszuwählen.

5. Verfahren für die wahlweise Tröpfchendispersion zur Optimierung der Qualität von Bildern aus einem kontinuierlichen Tintenstrahldrucker, wobei das Verfahren die folgenden Schritte enthält:
Identifizieren eines Pixels für eine Verarbeitung;
Bereitstellen von Daten aus zumindest einem Umgebungspixel bezogen auf das identifizierte Pixel; und
Benutzen der Daten des Umgebungspixels, um die Tröpfchenanordnung innerhalb des identifizierten Pixels auszuwählen.

6. Verfahren für die selektive Tröpfchendispersion nach Anspruch 5,
bei dem der Schritt des Bereitstellens von Daten aus zumindest einem Umgebungspixel den Schritt des Bereitstellens von Daten aus benachbarten Pixeln enthält.

7. Verfahren für die selektive Tröpfchendispersion nach Anspruch 6,
bei dem der Schritt des Bereitstellens von Daten aus benachbarten Pixeln die folgenden Schritte enthält:
Bereitstellen von Daten aus einem vorausgehenden Pixel; und
Bereitstellen von Daten aus einem nachfolgenden Pixel.

8. Verfahren für die selektive Tröpfchendispersion nach Anspruch 6,
bei dem der Schritt des Bereitstellens von Daten aus benachbarten Pixeln die folgenden Schritte enthält:
Bereitstellen von Daten aus einem links benachbarten Pixel;
Bereitstellen von Daten aus einem rechts benachbarten Pixel;
Bereitstellen von Daten aus einem vorausgehenden Pixel; und
Bereitstellen von Daten aus einem nachfolgenden Pixel.

9. Verfahren für die selektive Tröpfchendispersion für die Optimierung der Qualität von Bildern aus einem kontinuierlichen Tintenstrahldrucker, wobei das Verfahren die folgenden Schritte enthält:
Identifizieren eines Pixels für eine Verarbeitung; und
Auswählen der Anordnung von Tröpfchen innerhalb des zu druckenden Pixels unabhängig von den umgebenden Pixeln.

10. Verfahren nach Anspruch 9,
bei dem der Schritt des Auswählens der Anordnung von Tröpfchen innerhalb des zu druckenden Pixels den Schritt der unabhängigen Einstellung der Anordnung von Tröpfchen innerhalb des zu druckenden Pixels enthält.

## Revendications

1. Procédé d'optimisation de la qualité des images à partir d'une imprimante à jet d'encre en continu, comprenant les étapes suivantes :
- l'identification d'un pixel à imprimer ; et
- la sélection du placement de gouttelettes dans le pixel à imprimer afin d'optimiser la qualité d'image.

2. Procédé selon la revendication 1, selon lequel l'étape de sélection du placement des gouttelettes dans le pixel à imprimer afin d'optimiser la qualité d'image comprend une étape de réglage sans condition du placement des gouttelettes dans le pixel à imprimer.

3. Procédé selon la revendication 1, selon lequel l'étape de sélection du placement des gouttelettes dans le pixel à imprimer afin d'optimiser la qualité d'image comprend une étape de réglage conditionnel du placement des gouttelettes dans le pixel à imprimer.

4. Procédé selon la revendication 3, selon lequel l'étape de réglage conditionnel du placement des gouttelettes dans le pixel à imprimer comprend les étapes suivantes :
- la fourniture de données à partir d'au moins un pixel environnant par rapport au pixel identifié ; et
- l'utilisation des données de pixel environnant afin de sélectionner un placement de gouttelettes dans le pixel identifié.

5. Procédé de dispersion sélective de gouttelettes pour l'optimisation de la qualité des images à partir d'une imprimante à jet d'encre en continu, procédé comprenant les étapes suivantes :
- l'identification d'un pixel pour une manipulation ;
- la fourniture de données à partir d'au moins un pixel environnant par rapport au pixel identifié ; et
- l'utilisation des données de pixel environnant afin de sélectionner un placement de gouttelettes dans le pixel identifié.

6. Procédé de dispersion sélective de gouttelettes selon la revendication 5, selon lequel l'étape de fourniture de données à partir d'au moins un pixel environnant comprend une étape de fourniture de données à partir des pixels voisins.

7. Procédé de dispersion sélective de gouttelettes selon la revendication 6, selon lequel l'étape de fourniture de données à partir de pixels voisins comprend les étapes suivantes :
- la fourniture de données à partir d'un pixel précédent ; et
- la fourniture de données à partir d'un pixel suivant.

8. Procédé de dispersion sélective de gouttelettes selon la revendication 6, selon lequel l'étape de fourniture de données à partir de pixels voisins comprend les étapes suivantes :
- la fourniture de données à partir d'un pixel adjacent de gauche ;
- la fourniture de données à partir d'un pixel adjacent de droite ;
- la fourniture de données à partir d'un pixel de tête ; et
- la fourniture de données à partir d'un pixel de queue.

9. Procédé de dispersion sélective de gouttelettes pour l'optimisation de la qualité des images à partir d'une imprimante à jet d'encre en continu, procédé comprenant les étapes suivantes :
- l'identification d'un pixel pour la manipulation ; et
- le placement sélectif de gouttelettes dans le pixel à imprimer indépendamment des pixels environnants.

10. Procédé selon la revendication 9, selon lequel l'étape de placement sélectif de gouttelettes dans le pixel à imprimer comprend une étape de réglage sans condition du placement des gouttelettes dans le pixel à imprimer.
